# FASCICULE DE BREVET EUROPEEN

(11) **EP 2 295 298 B1**
(45) Date de publication et mention de la délivrance du brevet: **22.04.2015**
(21) Numéro de dépôt: 10175842.3
(22) Date de dépôt: 08.09.2010
(51) Int. Cl.: B60R 25/20, B60R 25/25, G07C 9/00

(54) **Système de sécurité pour véhicule automobile et procédé d'exploitation correspondant**
Kraftfahrzeugsicherheitssystem und enstprechendes Betriebsverfahren
Security system for an automotive vehicle and corresponding operation method

(30) Priorité: 15.09.2009 FR 0904402
(43) Date de publication de la demande: 16.03.2011
(73) Titulaire: Valeo Comfort and Driving Assistance, 94046 Créteil Cedex (FR)
(72) Inventeur: Houache, Frédéric, 94046 Créteil Cedex (FR); Menard, Eric, 94046 Créteil Cedex (FR)
(74) Mandataire: Jacquot, Ludovic R. G.

(56) Documents cités:
- WO-A1-01/08941
- DE-C1- 19 917 885
- US-A1- 2008 252 412
- US-B1- 6 219 793

## Description

L'invention concerne un système de sécurité pour véhicule automobile. L'invention concerne également un procédé d'apprentissage pour un tel système de sécurité.

De plus en plus de système d'accès dits « mains libres » sont utilisés pour les véhicules automobiles. Ces systèmes d'accès comportent généralement un terminal porté par l'utilisateur qui communique avec une unité embarquée dans le véhicule pour authentifier l'utilisateur portant le terminal.

À cet effet, le terminal émet par exemple un signal comportant un code à destination de l'unité embarquée dans le véhicule qui à réception de ce code vérifie s'il correspond à un code autorisé.

Récemment, on utilise des systèmes de sécurité permettant une authentification par reconnaissance biométrique par exemple par empreintes digitales. Dans ce cas, le signal émis vers l'unité embarquée comporte un fichier d'empreintes digitales.

Avec un tel système, l'apprentissage de nouveaux utilisateurs à autoriser peut être mis en oeuvre.

Toutefois, le niveau de sécurité d'une telle authentification biométrique reste limité. En effet, rien ne garantit que l'apprentissage ne s'est pas fait sous contrainte. Ainsi un voleur potentiel peut facilement être autorisé à utiliser le véhicule en menaçant le propriétaire du véhicule. Le document WO-A-01/08941 montre un système de l'état de la technique d'accord avec le préambule de la revendication 1.

L'invention a donc pour objectif de palier cet inconvénient de l'art antérieur en améliorant le niveau de sécurité de tels systèmes pour véhicule automobile.

À cet effet, l'invention a pour objet un système de sécurité pour véhicule automobile **caractérisé en ce qu**'il comprend :
- un dispositif d'authentification d'au moins un utilisateur autorisé par reconnaissance de données biométriques de l'utilisateur autorisé,
- un dispositif de verrouillage/déverrouillage dudit véhicule pour verrouiller/déverrouiller ledit véhicule lorsqu'un utilisateur autorisé est authentifié,
- un dispositif d'apprentissage d'un nouvel utilisateur à autoriser configuré :
   - pour être activé par un utilisateur autorisé authentifié,
   - pour faire l'acquisition des données biométriques d'un nouvel utilisateur à autoriser, et
   - pour transmettre les données biométriques relevées du nouvel utilisateur à autoriser vers un serveur de données biométriques externe audit véhicule, et
- un moyen d'enregistrement embarqué dans ledit véhicule des données biométriques du nouvel utilisateur à autoriser, le dispositif d'authentification du système étant configuré pour recevoir un signal d'inhibition du serveur de données biométriques externe, bloquant l'authentification par reconnaissance biométrique en cas de vol déclaré dudit véhicule.

Le nouvel utilisateur est donc obligé d'inscrire ses données biométriques sur le serveur externe, si le propriétaire du véhicule déclare un vol ou un apprentissage sous la menace, le nouvel utilisateur peut être retrouvé à partir de ses données biométriques.

Ledit système de sécurité peut en outre comporter une ou plusieurs caractéristiques suivantes, prises séparément ou en combinaison :
- le dispositif de verrouillage/déverrouillage est configuré pour autoriser/bloquer l'accès audit véhicule,
- le dispositif de verrouillage/déverrouillage est configuré pour autoriser/bloquer le démarrage dudit véhicule,
- le moyen d'enregistrement embarqué dans ledit véhicule est configuré pour enregistrer les données biométriques acquises du nouvel utilisateur à autoriser, transmises par le serveur de données biométriques externe,
- le moyen d'enregistrement embarqué dans ledit véhicule est configuré pour enregistrer les données biométriques acquises du nouvel utilisateur à autoriser, transmises par le dispositif d'apprentissage,
- le dispositif d'apprentissage comporte un moyen de configuration de conditions d'autorisation d'un nouvel utilisateur pour limiter dans le temps l'autorisation du nouvel utilisateur,
- lesdites données biométriques comprennent des données faciales pour une reconnaissance faciale,
- le dispositif d'apprentissage comporte un moyen de capture d'au moins une image faciale du nouvel utilisateur à autoriser,
- le dispositif d'apprentissage comporte un téléphone mobile équipé d'un appareil de prise de vue photographique et configuré pour communiquer avec le serveur de données biométriques externe audit véhicule et avec le dispositif d'authentification dudit système de sécurité,
- le dispositif d'apprentissage comporte un moyen de vérification que ladite image capturée répond à des paramètres de reconnaissance faciale prédéfinis permettant une reconnaissance faciale,
- le dispositif d'apprentissage comporte au moins un moyen de traitement de ladite image faciale capturée pour faciliter la transmission de ladite image facial,
- le dispositif d'authentification est configuré pour recevoir un signal d'inhibition du serveur de données biométriques externe, bloquant l'authentification par reconnaissance biométrique en cas de vol déclaré dudit véhicule.

L'invention concerne également un procédé d'exploitation pour un tel système de sécurité **caractérisé en ce que** ledit procédé d'exploitation comporte un procédé d'apprentissage avec les étapes suivantes :
- on authentifie un utilisateur autorisé par reconnaissance de données biométriques de l'utilisateur autorisé,
- on reçoit une requête d'apprentissage d'un utilisateur à autoriser transmise par l'utilisateur authentifié,
- on fait l'acquisition des données biométriques du nouvel utilisateur à autoriser,
- on transmet les données biométriques acquises au serveur de données biométriques externe audit véhicule, et
- on transmet les données biométriques relevées au moyen d'enregistrement embarqué dans ledit véhicule, le procédé d'exploitation comportant un procédé d'inhibition de l'authentification par réception d'un signal d'inhibition du serveur de données biométriques externe bloquant l'authentification par reconnaissance biométrique en cas de vol déclaré dudit véhicule.

Ledit procédé d'apprentissage peut en outre comporter une ou plusieurs caractéristiques suivantes, prises séparément ou en combinaison :
- les données biométriques sont transmises par le serveur de données biométriques externe audit véhicule à destination du moyen d'enregistrement embarqué dans ledit véhicule,
- lesdites données biométriques transmises sont cryptées,
- lesdites données biométriques comprennent des données faciales pour une reconnaissance faciale, et ledit procédé d'apprentissage comporte les étapes suivantes :
   - on capture au moins une image faciale du nouvel utilisateur à autoriser,
   - on vérifie si ladite image capturée répond à des paramètres de reconnaissance faciale prédéfinis permettant une reconnaissance faciale, et
   - on transmet ladite image faciale capturée répondant auxdits paramètres de reconnaissance faciale,
- ledit procédé d'apprentissage comporte au moins une étape supplémentaire de traitement de ladite image faciale capturée pour faciliter la transmission de ladite image faciale, et
- on compresse ladite image faciale capturée lors de ladite étape de traitement.

D'autres caractéristiques et avantages de l'invention ressortiront de la description suivante, donnée à titre d'exemple, sans caractère limitatif, en regard des dessins annexés parmi lesquels :
- la figure 1 illustre un véhicule équipé d'un système de sécurité selon l'invention,
- la figure 2 représente de façon schématique un système de sécurité simplifié pour véhicule automobile,
- la figure 3 illustre les différentes étapes d'un procédé d'authentification d'un utilisateur autorisé, et
- la figure 4 illustre les différentes étapes d'un procédé d'apprentissage selon l'invention.

Dans ces figures, les éléments identiques portent les mêmes références.

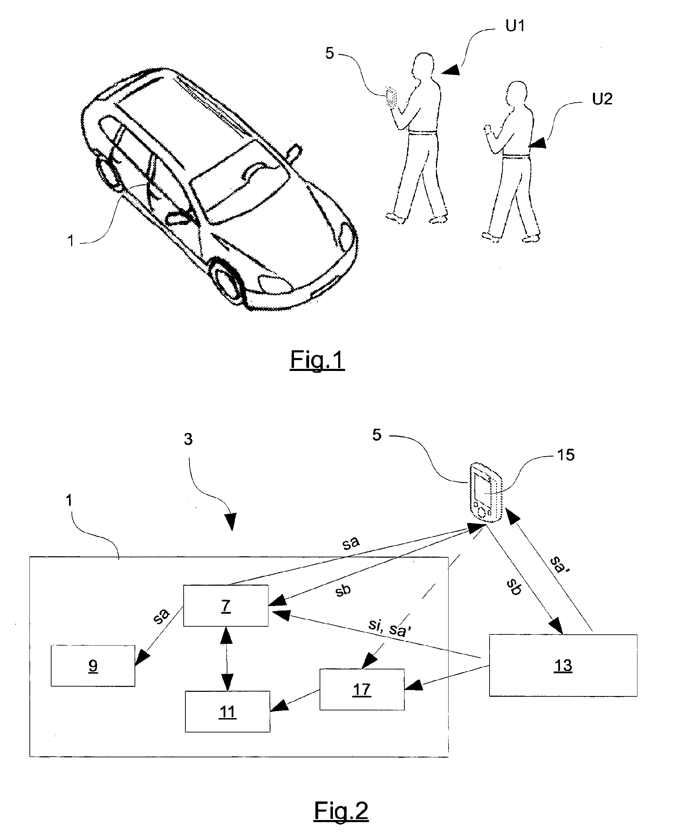

On a représenté sur la figure 1 un véhicule 1 équipé d'un système de sécurité 3 illustré de façon schématique sur la figure 2, permettant d'authentifier un utilisateur autorisé U1 (figure 1) par reconnaissance de données biométriques de l'utilisateur U1.

En se référant à la figure 2, le système de sécurité 3 comporte :
- un dispositif d'authentification 5,7 d'un utilisateur autorisé,
- un dispositif de verrouillage/déverrouillage 9 du véhicule pour verrouiller/déverrouiller le véhicule lorsqu'un utilisateur autorisé est authentifié, et
- un dispositif d'apprentissage 5 d'un nouvel utilisateur à autoriser.

Le dispositif d'authentification 5,7 est configuré pour authentifier l'utilisateur par reconnaissance de données biométriques de l'utilisateur. Pour cela, les données biométriques des utilisateurs autorisés sont préalablement enregistrées dans une base de données 11 embarquée dans le véhicule 1 et dans un serveur 13 de données biométriques externe au véhicule 1.

On peut citer entre autres comme exemple de données biométriques d'un utilisateur, un fichier d'empreintes digitales et/ou de la paume de la main, un fichier d'empreintes rétiniennes, le motif de l'iris, les traits du visage ou plus généralement des données faciales. Bien entendu, on peut combiner différentes données biométriques pour plus de sécurité, par exemple on authentifie un utilisateur par reconnaissance faciale et à l'aide de ses empreintes digitales.

Dans la suite de la description on prend pour exemple la reconnaissance faciale. La reconnaissance faciale permet d'authentifier un utilisateur par comparaison d'une ou plusieurs images de l'utilisateur avec des images de référence enregistrées dans la base de données 11.

À titre d'exemple, on identifie sur les images de référence des éléments de comparaison tels que la forme globale du visage, la forme des yeux, la couleur des yeux, la forme du nez, la forme de la bouche, le type de chevelure, la distance entre les deux yeux, la distance entre le nez et la bouche, la distance entre les yeux et les oreilles, etc. Au cours de la comparaison de ces éléments identifiés avec les éléments associés de l'utilisateur U1 à authentifier, on note pour chaque élément comparé un score de comparaison, puis à la fin de la comparaison on détermine un score global de comparaison. Lorsque le score global de comparaison atteint un seuil prédéfini, par exemple 80%, on considère que les données biométriques de l'utilisateur U1 correspondent aux données biométriques d'un utilisateur autorisé et l'utilisateur U1 est authentifié.

En outre, la reconnaissance faciale permet de baisser le niveau d'exigence de la reconnaissance biométrique.

Dans l'exemple illustré, le dispositif d'authentification 5,7 comporte un terminal 5 d'authentification porté par l'utilisateur U1 et une unité 7 d'authentification embarquée dans le véhicule 1. Bien entendu, on peut prévoir un terminal 5 intégré au véhicule 1.

Le terminal 5 comporte un moyen d'acquisition des données biométriques de l'utilisateur U1. Dans l'exemple illustré, le terminal 5 est un téléphone mobile équipé d'un appareil de prise de vue photographique permettant de capturer au moins une image du visage de l'utilisateur U1 pour une reconnaissance faciale de l'utilisateur.

Selon une alternative, on peut prévoir une caméra intégrée dans le tableau de bord du véhicule 1 ou encore dans un miroir du véhicule 1.

Le terminal 5 comporte également un moyen de transmission d'un signal sb à destination de l'unité 7, ce signal sb comportant les données biométriques acquises de l'utilisateur U1.

L'unité 7 comporte quant à elle au moins un moyen de traitement pour :
- recevoir les données biométriques transmises par le terminal 5 via le signal sb, comportant par exemple au moins une image du visage de l'utilisateur U1,
- comparer les données biométriques reçues avec les données biométriques enregistrés dans la base de données 11, et
- transmettre un signal d'authentification sa au dispositif de verrouillage/déverrouillage 9 lorsque les données biométriques reçues correspondent à des données biométriques enregistrées d'un utilisateur autorisé.

En variante, le moyen de transmission du terminal 5 peut également transmettre le signal sb à destination du serveur 13 externe pour une authentification plus sûre.

Dans ce cas, le serveur 13 externe comporte au moins un moyen de traitement pour :
- recevoir les données biométriques transmises par le terminal 5 via le signal sb, comportant par exemple au moins une image du visage de l'utilisateur U1,
- comparer les données biométriques reçues avec les données biométriques enregistrés dans le serveur 13, et
- lorsque les données biométriques reçues correspondent à des données biométriques enregistrées d'un utilisateur autorisé, transmettre un signal d'authentification sa' à l'unité d'authentification 7 et éventuellement au terminal 5.

Le dispositif de verrouillage/déverrouillage 9 peut être relié au mécanisme de serrure du véhicule pour autoriser ou bloquer l'accès au véhicule 1.

Le dispositif de verrouillage/déverrouillage 9 peut également être relié à la colonne de direction du véhicule 1 pour autoriser ou bloquer le démarrage du véhicule 1.

En outre le dispositif de verrouillage/déverrouillage 9 comporte au moins un moyen de traitement pour :
- recevoir le signal d'authentification sa transmis par l'unité 7 d'authentification, et
- commander le verrouillage/déverrouillage par exemple du mécanisme de serrure ou de la colonne de direction du véhicule 1 lorsqu'un utilisateur autorisé est authentifié.

Ainsi, en référence aux figures 1 à 3, lorsqu'un utilisateur U1 veut avoir accès au véhicule ou pouvoir démarrer le véhicule 1, l'utilisateur U1 doit d'abord être authentifié. Pour cela, on fait l'acquisition à l'étape E1 des données biométriques de l'utilisateur U1 par exemple en capturant au moins une image de l'utilisateur U1 à l'aide du terminal 5, puis le terminal 5 transmet à l'étape E2 un signal sb comportant les données biométriques acquises de l'utilisateur U1 à destination de l'unité 7 d'authentification.

L'unité 7 d'authentification compare alors à l'étape E3 les données biométriques reçues avec les données biométriques enregistrées dans la base de données 11.

Si les données biométriques reçues correspondent à des données enregistrées dans la base de données 11, l'utilisateur U1 est authentifié et un signal d'authentification sa est transmis à l'étape E4 au dispositif de verrouillage/déverrouillage 9 qui permet de changer l'état du véhicule 1 à l'étape E5, par exemple pour autoriser l'accès au véhicule 1 .

Au contraire, si les données biométriques reçues ne correspondent pas à des données biométriques d'un utilisateur autorisé, aucun signal d'authentification n'est transmis à l'unité de verrouillage/déverrouillage 9 et le véhicule ne change pas d'état.

Bien entendu, l'ordre des étapes de ce procédé d'authentification peut être interverti.

Selon une alternative, le terminal 5 transmet également le signal sb comportant les données biométriques acquises de l'utilisateur U1 à destination su serveur 13 externe, qui compare les données biométriques reçues avec les données biométriques enregistrées, et transmet un signal d'authentification sa' à destination de l'unité 7 d'authentification.

Par ailleurs, le dispositif d'apprentissage 5 permet d'enregistrer les données biométriques d'un nouvel utilisateur U2 à autoriser. Ce dispositif d'apprentissage 5 est configuré pour être activé uniquement par un utilisateur autorisé authentifié U1.

Dans l'exemple illustré, le dispositif d'apprentissage comporte le terminal 5. L'utilisation d'un téléphone mobile 5 permet de pouvoir faire l'apprentissage en un lieu distant du véhicule 1.

À cet effet, le terminal 5 comporte une application que l'utilisateur U1 peut activer pour commencer l'apprentissage du nouvel utilisateur U2.

Le terminal 5 comporte alors au moins un moyen de traitement pour :
- vérifier si l'utilisateur U1 a déjà été authentifié,
- si oui, autoriser l'apprentissage du nouvel utilisateur U2,
- si non, générer une requête d'authentification de l'utilisateur U1, cette requête s'affiche par exemple sous forme d'un message sur un écran 15 du terminal 5, et
- recevoir le signal d'authentification sa transmis par l'unité 7 d'authentification.

Pour plus de sécurité, on peut prévoir que l'authentification doit être faite en corrélation avec le serveur 13 externe. Dans ce cas, le terminal 5 comporte au moins un moyen de réception du signal d'authentification sa' transmis par le serveur 13 externe.

De plus, le terminal 5 peut également générer un message qui s'affiche sur l'écran 15 pour commencer l'apprentissage une fois l'utilisateur autorisé U1 authentifié, et éventuellement un ou plusieurs messages pour guider le nouvel utilisateur U2 durant l'apprentissage.

Le terminal 5 peut également comporter un moyen de configuration des conditions d'autorisation du nouvel utilisateur U2, concernant par exemple la durée d'autorisation du nouvel utilisateur U2 et/ou la fréquence d'autorisation du nouvel utilisateur U2.

Ainsi, le propriétaire du véhicule 1 peut prêter son véhicule 1 à un nouvel utilisateur U2 de façon limitée dans le temps, de sorte que lorsque la période de prêt est terminée le nouvel utilisateur U2 ne pourra plus être autorisé. Dans ce cas, le nouvel utilisateur U2 ne dispose pas des mêmes droits d'accès que le propriétaire du véhicule 1 afin qu'il ne puisse pas modifier ses conditions de prêt ni rajouter de nouveaux utilisateurs à autoriser sans l'accord du propriétaire du véhicule 1.

Selon un autre exemple, une entreprise peut confier un véhicule de fonction à un ou plusieurs salariés ayant chacun une limitation de temps, par exemple un premier utilisateur peut être autorisé à utiliser le véhicule de fonction tous les lundis pendant deux mois, et un deuxième utilisateur peut être autorisé à utiliser le véhicule de fonction tous les jeudis et vendredis pendant un an. Dans ce cas, même si l'utilisateur est authentifié, si le jour ne correspond pas à un jour autorisé, l'utilisateur ne peut pas utiliser le véhicule.

Selon encore un autre exemple, une agence de location de véhicules peut enregistrer un nouvel utilisateur U2 à autoriser uniquement pour la durée du contrat de location.

Dans tous ces cas, dès que la durée d'autorisation s'achève, les données biométriques du nouvel utilisateur U2 sont supprimées de la base de données 11 et le nouvel utilisateur U2 ne peut désormais plus être authentifié. En revanche, les données biométriques de ces utilisateurs U2 restent mémorisées dans le serveur 13 externe pour une période prédéterminée de façon à pouvoir retrouver facilement ces utilisateurs.

Le prêt ou la location d'un véhicule se trouve facilité(e) et plus sécurisé(e).

Dans l'exemple décrit, les données biométriques faciales du nouvel utilisateur U2 à autoriser sont acquises par capture d'au moins une image du visage du nouvel utilisateur U2 de façon similaire à l'acquisition des données biométriques d'un utilisateur autorisé U1 tel que décrit précédemment.

La reconnaissance faciale permet également de diminuer la complexité d'apprentissage.

Le terminal 5 comporte en outre au moins un moyen de vérification pour vérifier que l'image capturée répond à des paramètres de reconnaissance faciale prédéfinis permettant une reconnaissance biométrique, tels que :
- un paramètre de position frontale; l'image capturée doit être une image de face de l'utilisateur U2 et non de profil,
- un paramètre de cadrage; le visage de l'utilisateur U2 doit être contenu dans un cadre prédéterminé, de préférence de forme ovale, sur l'image capturée,
- un paramètre d'expression neutre; l'utilisateur U2 doit avoir une expression neutre, sans sourire ou grimace, sur l'image capturée,
- un paramètre de visibilité des yeux, du nez et de la bouche; les cheveux de l'utilisateur U2 ne doivent pas tomber sur les yeux, aucun objet comme la monture des lunettes ou un foulard ne doit cacher les yeux, le nez et/ou la bouche.

Bien entendu, ces paramètres de reconnaissance faciale sont donnés à titre d'exemple et peuvent être adaptés en fonction de la technologie de reconnaissance faciale utilisée.

Par ailleurs, on pourrait prévoir par exemple que les données biométriques sont acquises grâce à plusieurs images capturées de l'utilisateur U2 de face et de profil.

En outre, le terminal 5 peut comporter au moins un moyen de traitement de l'image capturée, permettant de transmettre facilement l'image capturée. À titre d'exemple, le moyen de traitement est configuré pour convertir l'image dans un format adapté prédéterminé ou encore pour compresser l'image capturée.

Le terminal 5 comporte donc un moyen de transmission des données biométriques acquises du nouvel utilisateur U2 à autoriser, par exemple l'image capturée, vers le serveur 13 externe au véhicule 1.

Selon une première variante de réalisation, le moyen de transmission est également configuré pour transmettre les données biométriques acquises également à un moyen d'enregistrement 17 embarqué dans le véhicule 1 qui enregistre ces nouvelles données biométriques dans la base de données 11, comme l'illustre la flèche en pointillé sur la figure 2.

Selon une seconde variante de réalisation, c'est le serveur 13 externe qui transmet ces nouvelles données biométriques au moyen d'enregistrement 17 tel qu'illustré par la flèche en trait plein sur la figure 2. Cette variante de réalisation permet de garantir que les données biométriques du nouvel utilisateur U2 ne sont enregistrées dans la base de données 11 interne au véhicule 1 qu'après réception de ces données biométriques par le serveur 13 externe.

On peut prévoir que la transmission entre le serveur 13 et le moyen d'enregistrement 17 est sécurisée par exemple en cryptant les données biométriques transmises.

Ce serveur externe 17 est sécurisé et les données biométriques enregistrées ne peuvent être consultées qu'en cas de vol déclaré par le propriétaire du véhicule 1.

On peut également prévoir que le serveur externe 17 comporte un moyen d'inhibition de reconnaissance biométrique en cas de vol déclaré par le propriétaire du véhicule. Ce moyen d'inhibition transmet un signal d'inhibition si à l'unité 7 d'authentification du véhicule 1 pour empêcher toute reconnaissance biométrique et donc l'utilisation du véhicule.

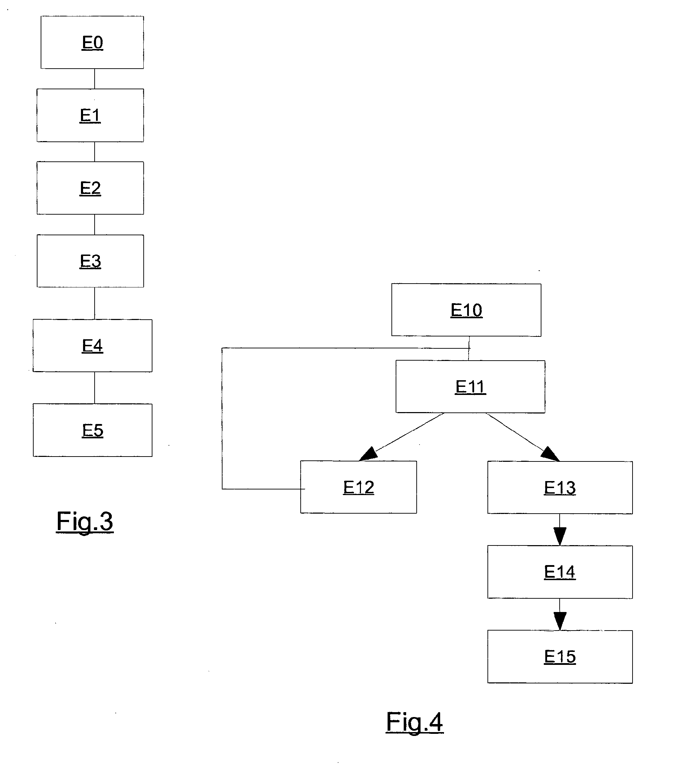

Dans ce cas, on peut prévoir que l'unité 7 d'authentification comporte un moyen de réception du signal d'inhibition si, le procédé d'authentification comporte alors une étape préliminaire E0 (figure 3) dans laquelle on vérifie si un signal d'inhibition si a été reçu. Lorsqu'un signal d'inhibition si est reçu, aucune authentification par reconnaissance biométrique ne peut être réalisée. Lorsque aucun signal d'inhibition si n'est reçu, l'authentification peut avoir lieu et on passe à l'étape E1.

Ainsi, même si l'enregistrement d'un nouvel utilisateur U2 se fait sous la menace, ce nouvel utilisateur U2 peut être retrouvé plus facilement grâce à ses données biométriques sur le serveur 13 externe et en plus son authentification par reconnaissance biométrique peut être bloquée par ce serveur 13 externe l'empêchant d'utiliser le véhicule volé.

En se référant aux figures 1, 2 et 4, lorsqu'un utilisateur autorisé U1 veut enregistrer un nouvel utilisateur U2 à autoriser, l'utilisateur autorisé U1 active le dispositif d'apprentissage 5 en appuyant par exemple sur un déclencheur du terminal 5, le dispositif d'apprentissage 5 reçoit alors une requête d'apprentissage d'un nouvel utilisateur U2 à autoriser lors d'une étape E10.

On vérifie à l'étape E11 que l'utilisateur U1 est un utilisateur autorisé authentifié par reconnaissance de données biométriques de l'utilisateur U1. Cette vérification consiste par exemple à vérifier qu'un signal d'authentification sa a été transmis par l'unité 7 d'authentification au terminal 5.

Si l'utilisateur U1 n'est pas encore authentifié on transmet à l'étape E12 une requête d'authentification de l'utilisateur et un procédé d'authentification de l'utilisateur U1 tel que décrit précédemment est mis en oeuvre puis on retourne à l'étape E11.

Lorsque l'utilisateur U1 est authentifié, on fait directement l'acquisition à l'étape E13 des données biométriques du nouvel utilisateur U2 à autoriser, puis on transmet à l'étape E14 les données biométriques acquises au serveur 13 de données biométriques externe au véhicule 1, et à l'étape E15 au moyen d'enregistrement 17 embarqué dans le véhicule 1 pour enregistrer ces nouvelles données biométriques du nouvel utilisateur U2 dans la base de données 11 afin de permettre son authentification par reconnaissance biométrique.

Bien entendu, l'ordre des étapes du procédé d'apprentissage peut également être interverti.

On comprend donc qu'avec un tel système de sécurité un voleur potentiel est obligé d'inscrire ses données biométriques sur le serveur 13 externe pour pouvoir utiliser le véhicule 1, ce qui permet de le retrouver plus facilement lorsque le propriétaire du véhicule déclare le vol.

Un tel système de sécurité décourage un voleur potentiel et confère une protection solide au véhicule et au propriétaire par exemple contre le « car jacking ».

Selon des caractéristiques avantageuses, le système de sécurité comprend un dispositif d'identification de l'administrateur lors de l'activation du dispositif d'apprentissage par comparaison d'un code saisi par l'administrateur avec un code préenregistré.

Avantageusement, le système de sécurité comprend un dispositif d'identification de l'administrateur autorisant l'activation du dispositif d'apprentissage par l'administrateur, lequel dispositif d'identification identifie l'administrateur par reconnaissance de données biométriques de l'administrateur.

Selon encore une caractéristique avantageuse, le système de sécurité comprend un dispositif d'apprentissage d'un nouvel utilisateur à autoriser qui est configuré pour transmettre les données biométriques relevées de l'administrateur vers le serveur de données biométriques externe audit véhicule.

Avantageusement, le dispositif d'identification de l'administrateur est constitué par le dispositif d'authentification de sorte que l'administrateur identifié est un utilisateur autorisé authentifié.

## Revendications

1. Système de sécurité pour véhicule automobile (1) comprenant :
- un dispositif d'authentification (5,7) d'au moins un utilisateur autorisé (U1) par reconnaissance de données biométriques de l'utilisateur autorisé (U1),
- un dispositif de blocage/déblocage d'une utilisation (9) dudit véhicule (1) pour bloquer/débloquer une utilisation dudit véhicule (1) lorsqu'un utilisateur autorisé est authentifié,
- un dispositif d'apprentissage (5) d'un nouvel utilisateur (U2) à autoriser configuré :
▪ pour être activé par un administrateur identifié,
▪ pour faire l'acquisition des données biométriques d'un nouvel utilisateur (U2) à autoriser, et
▪ pour transmettre les données biométriques relevées du nouvel utilisateur (U2) à autoriser vers un serveur (13) de données biométriques externe audit véhicule, et
- un moyen d'enregistrement (17) embarqué dans ledit véhicule (1) des données biométriques du nouvel utilisateur (U2) à autoriser ;
**caractérisé en ce que** le dispositif d'authentification (5) est configuré pour recevoir un signal d'inhibition (si) du serveur (13) de données biométriques externe,
bloquant l'authentification par reconnaissance biométrique en cas de vol déclaré dudit véhicule (1).

2. Système de sécurité selon la revendication 1, **caractérisé en ce qu'**il comprend un dispositif d'identification de l'administrateur lors de l'activation du dispositif d'apprentissage par comparaison d'un code saisi par l'administrateur avec un code préenregistré.

3. Système de sécurité selon la revendication 1, **caractérisé en ce qu'**il comprend un dispositif d'identification de l'administrateur autorisant l'activation du dispositif d'apprentissage par l'administrateur, lequel dispositif d'identification identifie l'administrateur par reconnaissance de données biométriques de l'administrateur.

4. Système de sécurité selon la revendication 3, **caractérisé en ce que** le dispositif d'apprentissage (5) d'un nouvel utilisateur (U2) à autoriser est configuré pour transmettre les données biométriques relevées de l'administrateur vers le serveur (13) de données biométriques externe audit véhicule.

5. Système de sécurité selon la revendication 3, **caractérisé en ce que** le dispositif d'identification de l'administrateur est constitué par le dispositif d'authentification de sorte que l'administrateur identifié est un utilisateur autorisé authentifié.

6. Système de sécurité selon la revendication 1, **caractérisé en ce que** le dispositif de blocage/déblocage (9) est configuré pour autoriser/bloquer l'accès audit véhicule.

7. Système de sécurité selon l'une quelconque des revendications précédentes, **caractérisé en ce que** le dispositif de blocage/déblocage (9) est configuré pour débloquer/bloquer le démarrage dudit véhicule.

8. Système de sécurité selon l'une quelconque des revendications précédentes, **caractérisé en ce que** le moyen d'enregistrement (17) embarqué dans ledit véhicule (1) est configuré pour enregistrer les données biométriques acquises du nouvel utilisateur (U2) à autoriser, transmises par le serveur (13) de données biométriques externe.

9. Système de sécurité selon l'une quelconque des revendications 1 à 7, **caractérisé en ce que** le moyen d'enregistrement (17) embarqué dans ledit véhicule (1) est configuré pour enregistrer les données biométriques acquises du nouvel utilisateur (U2) à autoriser, transmises par le dispositif d'apprentissage (5).

10. Système de sécurité selon l'une quelconque des revendications précédentes, **caractérisé en ce que** le dispositif d'apprentissage (5) comporte un moyen de configuration de conditions d'autorisation d'un nouvel utilisateur (U2) pour limiter dans le temps l'autorisation du nouvel utilisateur (U2).

11. Système de sécurité selon l'une quelconque des revendications précédentes, **caractérisé en ce que** lesdites données biométriques comprennent des données faciales pour une reconnaissance faciale.

12. Système de sécurité selon la revendication précédente, **caractérisé en ce que** le dispositif d'apprentissage (5) comporte un moyen de capture d'au moins une image faciale du nouvel utilisateur à autoriser.

13. Système de sécurité selon la revendication précédente, **caractérisé en ce que** le dispositif d'apprentissage (5) comporte un téléphone mobile (5) équipé d'un appareil de prise de vue photographique et configuré pour communiquer avec le serveur (13) de données biométriques externe audit véhicule (1) et avec le dispositif d'authentification (7) dudit système de sécurité.

14. Système de sécurité selon l'une des revendications 12 ou 13, **caractérisé en ce que** le dispositif d'apprentissage (5) comporte un moyen de vérification que ladite image capturée répond à des paramètres de reconnaissance faciale prédéfinis permettant une reconnaissance faciale.

15. Système de sécurité selon l'une quelconque des revendications 12 à 14, **caractérisé en ce que** le dispositif d'apprentissage (5) comporte au moins un moyen de traitement de ladite image faciale capturée pour faciliter la transmission de ladite image faciale.

16. Procédé d'exploitation d'un système de sécurité (3) pour véhicule automobile (1) selon l'une quelconque des revendications précédentes, **caractérisé en ce que** ledit procédé d'exploitation comporte un procédé d'apprentissage avec les étapes suivantes:
- on authentifie un utilisateur autorisé (U1) par reconnaissance de données biométriques de l'utilisateur autorisé (U1),
- on reçoit une requête d'apprentissage d'un utilisateur à autoriser transmise par un administrateur (U1),
- on fait l'acquisition des données biométriques du nouvel utilisateur (U2) à autoriser,
- on transmet les données biométriques acquises au serveur (13) de données biométriques externe audit véhicule (1), et
- on transmet les données biométriques relevées au moyen d'enregistrement (17) embarqué dans ledit véhicule (1), le procédé d'exploitation comportant un procédé d'inhibition de l'authentification par réception d'un signal d'inhibition du serveur de données biométriques externe bloquant l'authentification par reconnaissance biométrique en cas de vol déclaré dudit véhicule.

17. Procédé d'exploitation selon la revendication 17, **caractérisé en ce que** les données biométriques sont transmises par le serveur (13) de données biométriques externe audit véhicule (1) à destination du moyen d'enregistrement (17) embarqué dans ledit véhicule (1).

18. Procédé d'exploitation selon l'une des revendications 17 ou 18, **caractérisé en ce que** lesdites données biométriques transmises sont cryptées.

19. Procédé d'exploitation selon l'une quelconque des revendications 17 à 19, dans lequel lesdites données biométriques comprennent des données faciales pour une reconnaissance faciale, **caractérisé en ce qu'**il comporte les étapes suivantes :
- on capture au moins une image faciale du nouvel utilisateur (U2) à autoriser,
- on vérifie si ladite image capturée répond à des paramètres de reconnaissance faciale prédéfinis permettant une reconnaissance faciale, et
- on transmet ladite image faciale capturée répondant auxdits paramètres de reconnaissance faciale.

20. Procédé d'exploitation selon la revendication précédente,, **caractérisé en ce qu'**il comporte au moins une étape supplémentaire de traitement de ladite image faciale capturée pour faciliter la transmission de ladite image faciale.

21. Procédé d'exploitation selon la revendication précédente, **caractérisé en ce qu'**on compresse ladite image faciale capturée lors de ladite étape de traitement.

## Patentansprüche

1. Sicherheitssystem für Kraftfahrzeug (1), das Folgendes umfasst:
- eine Vorrichtung (5, 7) zum Authentifizieren wenigstens eines berechtigten Benutzers (U1) durch Erkennen biometrischer Daten des berechtigten Benutzers (U1),
- eine Vorrichtung (9) zum Sperren/Entsperren einer Benutzung des Fahrzeugs (1), um eine Benutzung des Fahrzeugs (1) zu sperren/entsperren, wenn ein berechtigter Benutzer authentifiziert wird,
- eine Vorrichtung (5) zum Lernen eines neuen zu berechtigenden Benutzers (U2), die konfiguriert ist:
· durch einen identifizierten Administrator aktiviert zu werden,
· die Erfassung biometrischer Daten eines neuen zu berechtigenden Benutzers (U2) zu veranlassen und
· die von dem neuen zu berechtigenden Benutzer (U2) erhobenen biometrischen Daten zu einem Server (13) für biometrische Daten außerhalb des Fahrzeugs zu senden, und
- ein Mittel (17) an Bord des Fahrzeugs (1) zum Aufzeichnen der biometrischen Daten des neuen zu berechtigenden Benutzers (U2);
**dadurch gekennzeichnet, dass** die Authentifizierungsvorrichtung (5) konfiguriert ist, ein Hemmsignal (si) von dem externen Server (13) für biometrische Daten, das die Authentifizierung durch biometrische Erkennung im Fall eines erklärten Diebstahls des Fahrzeugs (1) sperrt, zu empfangen.

2. Sicherheitssystem nach Anspruch 1, **dadurch gekennzeichnet, dass** es eine Vorrichtung umfasst, um den Administrator bei der Aktivierung der Lernvorrichtung durch Vergleichen eines von dem Administrator eingegebenen Codes mit einem im Voraus aufgezeichneten Code zu identifizieren.

3. Sicherheitssystem nach Anspruch 1, **dadurch gekennzeichnet, dass** es eine Vorrichtung zum Identifizieren des Administrators umfasst, die die Aktivierung der Lernvorrichtung durch den Administrator zulässt, wobei die Identifizierungsvorrichtung den Administrator durch Erkennen biometrischer Daten des Administrators identifiziert.

4. Sicherheitssystem nach Anspruch 3, **dadurch gekennzeichnet, dass** die Vorrichtung (5) zum Lernen eines neuen zu berechtigenden Benutzers (U2) konfiguriert ist, die von dem Administrator erhobenen biometrischen Daten zu dem Server (13) für biometrische Daten außerhalb des Fahrzeugs zu senden.

5. Sicherheitssystem noch Anspruch 3, **dadurch gekennzeichnet, dass** die Vorrichtung zum Identifizieren des Administrators durch die Authentifizierungsvorrichtung gebildet ist, derart, dass der identifizierte Administrator ein authentifizierter berechtigter Benutzer ist.

6. Sicherheitssystem nach Anspruch 1, **dadurch gekennzeichnet, dass** die Sperr-/Entsperrvorrichtung (9) konfiguriert ist, den Zugang zu dem Fahrzeug zuzulassen/zu sperren.

7. Sicherheitssystem nach einem der vorhergehenden Ansprüche, **dadurch gekennzeichnet, dass** die Sperr-/Entsperrvorrichtung (9) konfiguriert ist, das Starten des Fahrzeugs zu entsperren/sperren.

8. Sicherheitssystem nach einem der vorhergehenden Ansprüche, **dadurch gekennzeichnet, dass** das Aufzeichnungsmittel (17) an Bord des Fahrzeugs (1) konfiguriert ist, die biometrischen Daten, die von dem neuen zu berechtigenden Benutzer (U2) erfasst und von dem externen Server (13) für biometrische Daten gesendet werden, aufzuzeichnen.

9. Sicherheitssystem nach einem der Ansprüche 1 bis 7, **dadurch gekennzeichnet, dass** das Aufzeichnungsmittel (17) an Bord des Fahrzeugs (1) konfiguriert ist, die biometrischen Daten, die von dem neuen zu berechtigenden Benutzer (U2) erfasst und von der Lernvorrichtung (5) gesendet werden, aufzuzeichnen.

10. Sicherheitssystem nach einem der vorhergehenden Ansprüche, **dadurch gekennzeichnet, dass** die Vorrichtung (5) ein Mittel zum Konfigurieren von Bedingungen zum Berechtigen eines neuen Benutzers (U2) umfasst, um die die Zeit der Berechtigung des neuen Benutzers (U2) zu begrenzen.

11. Sicherheitssystem nach einem der vorhergehenden Ansprüche, **dadurch gekennzeichnet, dass** die biometrischen Daten Gesichtsdaten für eine Gesichtserkennung umfassen.

12. Sicherheitssystem nach dem vorhergehenden Anspruch, **dadurch gekennzeichnet, dass** die Lernvorrichtung (5) ein Mittel zum Aufnehmen wenigstens eines Gesichtsbildes des neuen zu berechtigenden Benutzers umfasst.

13. Sicherheitssystem nach dem vorhergehenden Anspruch, **dadurch gekennzeichnet, dass** die Lernvorrichtung (5) ein Mobiltelefon (5) umfasst, das mit einer Kameravorrichtung ausgerüstet ist und konfiguriert ist, mit dem Server (13) für biometrische Daten außerhalb des Fahrzeugs (1) und mit der Authentifizierungsvorrichtung (7) des Sicherheitssystems zu kommunizieren.

14. Sicherheitssystem nach einem der Ansprüche 12 oder 13, **dadurch gekennzeichnet, dass** die Lernvorrichtung (5) ein Mittel umfasst, um zu verifizieren, dass das aufgenommene Bild im Voraus definierten Gesichtserkennungsparametern, die eine Gesichtserkennung ermöglichen, entspricht.

15. Sicherheitsvorrichtung einem der Ansprüche 12 bis 14, **dadurch gekennzeichnet, dass** die Lernvorrichtung (5) wenigstens ein Mittel zum Bearbeiten des aufgenommenen Gesichtsbildes umfasst, um das Senden des Gesichtsbildes zu erleichtern.

16. Verfahren zum Betreiben eines Sicherheitssystems (3) für Kraftfahrzeug (1) nach einem der vorhergehenden Ansprüche, **dadurch gekennzeichnet, dass** das Betriebsverfahren ein Lernverfahren mit den folgenden Schritten umfasst:
- Authentifizieren eines berechtigten Benutzers (U1) durch Erkennen biometrischer Daten des berechtigten Benutzers (U1),
- Empfangen einer Anforderung zum Lernen eines zu berechtigenden Benutzers, die von einem Administrator (U1) gesendet wird,
- Erfassen biometrischer Daten des neuen zu berechtigenden Benutzers (U2),
- Senden der erfassten biometrischen Daten zu dem Server (13) für biometrische Daten außerhalb des Fahrzeugs (1), und
- Senden der erhobenen biometrischen Daten zu dem Aufzeichnungsmittel (17) an Bord des Fahrzeugs (1), wobei das Betriebsverfahren ein Verfahren zum Hemmen der Authentifizierung durch Empfangen eines Hemmsignals von dem externen Server für biometrische Daten, das die Authentifizierung durch biometrische Erkennung im Fall eines erklärten Diebstahls des Fahrzeugs sperrt, umfasst.

17. Betriebsverfahren nach Anspruch 17, **dadurch gekennzeichnet, dass** die biometrischen Daten von dem Server (13) für biometrische Daten außerhalb des Fahrzeugs (1) zu dem Aufzeichnungsmittel (17) an Bord des Fahrzeugs (1) gesendet werden.

18. Betriebsverfahren einem der Ansprüche 17 oder 18, **dadurch gekennzeichnet, dass** die gesendeten biometrischen Daten verschlüsselt werden.

19. Betriebsverfahren nach einem der Ansprüche 17 bis 19, wobei die biometrischen Daten Gesichtsdaten für eine Gesichtserkennung umfassen, **dadurch gekennzeichnet, dass** es die folgenden Schritte umfasst:
- Aufnehmen wenigstens eines Gesichtsbildes des neuen zu berechtigenden Benutzers (U2),
- Verifizieren, ob das aufgenommene Bild im Voraus definierten Gesichtserkennungsparametern, die eine Gesichtserkennung ermöglichen, entspricht, und
- Senden des aufgenommenen Gesichtsbildes, das den Gesichtserkennungsparametern entspricht.

20. Betriebsverfahren nach dem vorhergehenden Anspruch, **dadurch gekennzeichnet, dass** es wenigstens einen zusätzlichen Schritt des Bearbeitens des aufgenommenen Gesichtsbildes umfasst, um das Senden des Gesichtsbildes zu erleichtern.

21. Betriebsverfahren nach dem vorhergehenden Anspruch, **dadurch gekennzeichnet, dass** das aufgenommene Gesichtsbild im Bearbeitungsschritt komprimiert wird.

## Claims

1. Security system for a motor vehicle (1) comprising:
- a device (5, 7) for authenticating at least one authorized user (U1) by the recognition of biometric data of the authorized user (U1),
- a device for blocking/unblocking a use (9) of said vehicle (1) to block/unblock a use of said vehicle (1) when an authorized user is authenticated,
- a device (5) for learning of a new user (U2) to be authorized, configured:
▪ to be activated by an identified administrator,
▪ to handle the acquisition of the biometric data of a new user (U2) to be authorized, and
▪ to transmit the recorded biometric data of the new user (U2) to be authorized to a biometric data server (13) external to said vehicle, and
- a storage means (17) embedded in said vehicle (1) for storing the biometric data of the new user (U2) to be authorized;
**characterized in that** the authentication device (5) is configured to receive an inhibiting signal (si) for inhibiting the external biometric data server (13), blocking the authentication by biometric recognition in the case of declared theft of said vehicle (1).

2. Security system according to Claim 1, **characterized in that** it comprises a device for identifying the administrator upon the activation of the learning device by the comparison of a code input by the administrator with a prestored code.

3. Security system according to Claim 1, **characterized in that** it comprises a device for identifying the administrator authorizing the activation of the learning device by the administrator, said identification device identifying the administrator by the recognition of biometric data of the administrator.

4. Security system according to Claim 3, **characterized in that** the device (5) for learning of a new user (U2) to be authorized is configured to transmit the recorded biometric data of the administrator to the biometric data server (13) external to said vehicle.

5. Security system according to Claim 3, **characterized in that** the device for identifying the administrator consists of the authentication device such that the identified administrator is an authenticated authorized user.

6. Security system according to Claim 1, **characterized in that** the blocking/unblocking device (9) is configured to authorize/block access to said vehicle.

7. Security system according to any one of the preceding claims, **characterized in that** the blocking/unblocking device (9) is configured to unblock/block the starting of said vehicle.

8. Security system according to any one of the preceding claims, **characterized in that** the storage means (17) embedded in said vehicle (1) is configured to store the biometric data acquired from the new user (U2) to be authorized, transmitted by the external biometric data server (13).

9. Security system according to any one of Claims 1 to 7, **characterized in that** the storage means (17) embedded in said vehicle (1) is configured to store the biometric data acquired from the new user (U2) to be authorized, transmitted by the learning device (5).

10. Security system according to any one of the preceding claims, **characterized in that** the learning device (5) comprises a means for configuring conditions for the authorization of a new user (U2) to limit the authorization of the new user (U2) in time.

11. Security system according to any one of the preceding claims, **characterized in that** said biometric data comprise facial data for facial recognition.

12. Security system according to the preceding claim, **characterized in that** the learning device (5) comprises a means for capturing at least one facial image of the new user to be authorized.

13. Security system according to the preceding claim, **characterized in that** the learning device (5) comprises a mobile telephone (5) equipped with a camera appliance and configured to communicate with the biometric data server (13) external to said vehicle (1) and with the authentication device (7) of said security system.

14. Security system according to one of Claims 12 and 13, **characterized in that** the learning device (5) comprises a means for checking that said captured image complies with predefined facial recognition parameters allowing for a facial recognition.

15. Security system according to any one of Claims 12 to 14, **characterized in that** the learning device (5) comprises at least one means for processing said captured facial image to facilitate the transmission of said facial image.

16. Method for operating a security system (3) for a motor vehicle (1) according to any one of the preceding claims, **characterized in that** said operating method comprises a learning method with the following steps:
- an authorized user (U1) is authenticated by the recognition of biometric data of the authorized user (U1),
- a request to learn of a user to be authorized is received, transmitted by an administrator (U1),
- the biometric data of the new user (U2) to be authorized are acquired,
- the acquired biometric data are transmitted to the biometric data server (13) external to said vehicle (1), and
- the recorded biometric data are transmitted to the storage means (17) embedded in said vehicle (1), the operating method comprising a method for inhibiting the authentication by the reception of an inhibiting signal from the external biometric data server blocking the authentication by biometric recognition in the case of declared theft of said vehicle.

17. Operating method according to Claim 17, **characterized in that** the biometric data are transmitted by the biometric data server (13) external to said vehicle (1) to the storage means (17) embedded in said vehicle (1).

18. Operating method according to one of Claims 17 and 18, **characterized in that** said transmitted biometric data are encrypted.

19. Operating method according to any one of Claims 17 to 19, in which said biometric data comprise facial data for a facial recognition, **characterized in that** it comprises the following steps:
- at least one facial image of the new user (U2) to be authorized is captured,
- a check is carried out to see if said captured image corresponds to predefined facial recognition parameters allowing for a facial recognition, and
- said captured facial image complying with said facial recognition parameters is transmitted.

20. Operating method according to the preceding claim, **characterized in that** it comprises at least one additional step of processing said captured facial image to facilitate the transmission of said facial image.

21. Operating method according to the preceding claim, **characterized in that** said captured facial image is compressed during said processing step.
